# EUROPEAN PATENT APPLICATION

(11) **EP 1 990 537 A2**
(43) Date of publication of application: **12.11.2008**
(21) Application number: 08251573.5
(22) Date of filing: 30.04.2008
(51) Int. Cl.: F03D 1/06

(54) **Improvements in the structural arrangement of wind generators**

(30) Priority: 07.05.2007 ES 200701206
(71) Applicant: M. Torres Diseños Industriales, S.A.U., 31119 Torres De Elorz (Navarra) (ES)
(72) Inventor: Torres Martinez, Manuel, 31007 Pamplona (ES)
(74) Representative: Evens, Paul Jonathan

(57) **Abstract**

The invention relates to improvements in the structural arrangement of wind generators, a wind rotor (1) with four, five or more blades being used, in relation to which the electric generator (2) is arranged at a distance, both of them being joined to one another by means of a shaft (3) in which a multiplier device (6) can be incorporated.

## Description

### Field of the Art

The present invention relates to wind generators formed by a blade rotor capturing the action of the wind to drive the rotation of an electricity production generator, proposing structural features improving the functionality and the output of said wind generators.

### State of the Art

Wind generators provided with an electricity production generator associated to a blade rotor driven by the action of the wind conventionally have the generator inside the body of the wind generator, close to the blade rotor which is arranged at the outer front part of said body of the wind generator.

With this arrangement, there is a very small space between the generator and the blade rotor, in which the entrance of operators is not accessible, such that the blade rotor must be disassembled for the maintenance operations requiring actions in this area, such operations therefore being very expensive.

In addition, for high-power multipolar wind generators, the cost of the generator increases by 7.5% for every r.p.m. that the rotation of the rotor is reduced, such that, for example, if a blade is designed to support a maximum speed of 80 m/s at its end, it can rotate 2 r.p.m. more than if it were designed to rotate only at 70 m/s, which involves 15% lower cost of the generator in the first case than in the second case.

However, for large blades the output per m² of the sweep surface decreases, it is therefore preferable to assemble on the hub more blades with a shorter length, which allows a higher number of r.p.m. of the hub, favoring the cost of the generator and increasing its energy efficiency.

In addition, for high powers, the loads supported by the root of the blades increase upon reducing the number of revolutions of the rotor, directly affecting the pitch bearings, which forces having to use very special expensive bearings, therefore it is also preferable to increase the number of blades in the rotor in order to distribute the loads, thus reducing the hub assembly cost.

By way of example, a 3 MW wind generator has the following magnitudes:
- Air gap = 7 m
- Stator width = 0.85 m
- Rotation speed = 18.5 r.p.m.

with these characteristics, the moving magnetic field is equal to 364 m²/minute, enough to generate 3 MW at 18.5 r.p.m. with four 41.5-meter blades.

In order to pass to 5 MW, there would have to be two wind generators like that described, but with four 53.5-meter blades at 14.5 r.p.m., since a generator with these features produces 2.5 MW, such that two identical generators rotating at 14.5 r.p.m. can be installed, each of them generating 2.5 MM.

For generating higher powers, it is furthermore necessary to have a gear box between the wind rotor and the generator, combining with a suitable number of blades in the wind rotor, because the revolutions of the generator must be reduced for said higher powers, which involves increasing the dimensions and the costs, making the transport and the manufacture difficult due to the necessary large components.

In this sense, to generate 7.5 MW at 11.5 r.p.m. for example, four 65.5-meter blades and a gear box with an input of 11.5 r.p.m. and an output of 44 r.p.m., equivalent to a multiplication of 3.82, are necessary; whereas to generate 10 MW 5 75-meter blades rotating at 10.5 r.p.m. and a. gear box with an input shaft of 10.5 r.p.m. and an output shaft of 58.8 r.p.m., equivalent to a multiplication of 5.6, would be needed.

### Object of the Invention

According to the invention, improvements in the structural embodiment of wind generators are provided, by means of which features favoring the functional availability of the wind generators that the invention is applied to and the possibility of reaching high-power productions with them are obtained.

According to the invention, the functional assembly of the wind generator is formed with the corresponding generator distanced from the blade rotor, with a connecting shaft between both extending along the body of the wind generator.

An arrangement is thus obtained with which all the parts of the functional assembly are accessible for operators from the inside the body of the wind generator, which favors the maintenance and/or repair operations on the generator, without it being necessary to disassemble the blade rotor, whereby the work of said maintenance and/or repair operations are quite considerably simplified, the down time of the wind generator being reduced to the same extent, with a great economic advantage as a result of all this.

In relation to the drive shaft of the generator, a wind rotor formed with four, five or more blades is arranged, the combination of said wind rotor with the incorporation of a multiplier mechanism for the rotation in the shaft joining it to the electric generator being provided.

An arrangement which further allows using a single multipolar permanent magnet type generator to form wind generators with powers from 3 to 10 MW is thus obtained.

Due to the foregoing, the object of the invention has truly advantageous features, acquiring its own identity and a preferred character for the structural formation of the wind generators for which its application is intended.

### Description of the Drawings

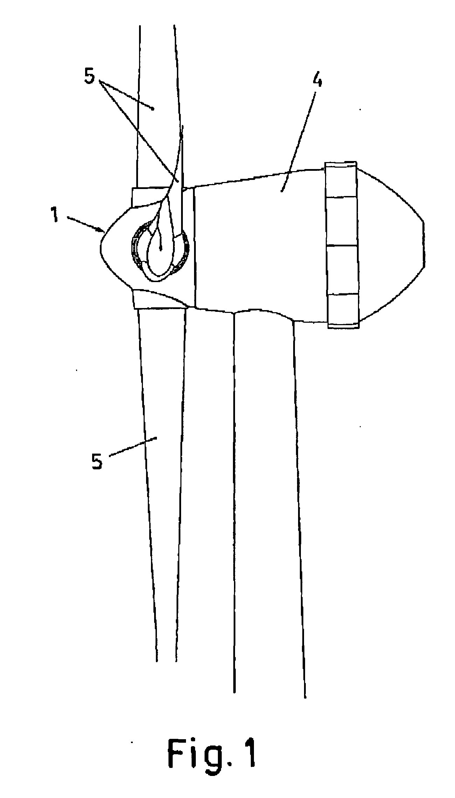

Figure 1 shows a side view of a wind generator made according to the invention.

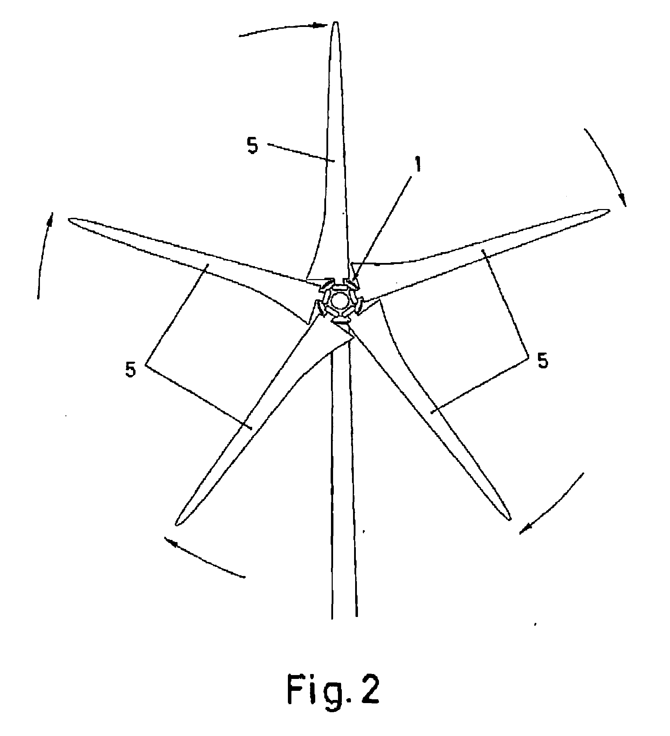

Figure 2 is a schematic front view of the previous wind generator.
Figure 3 is an enlarged sectional view of the wind generator according to one embodiment.
Figure 4 is a sectional view of the wind generator according to another embodiment.
Figure 5 is a perspective view of the functional assembly of the wind generator according to the embodiment of Figure 4.

### Detailed Description of the Invention

The object of the invention relates to particular features in the structural arrangement of electricity production wind generators formed with a wind rotor (1) for capturing the action of the wind to rotatably drive an electric power-producing generator (2).

According to the object of the invention, in the functional arrangement on the wind generator, the electric generator (2) is arranged at a distance from the wind rotor (1), both of them being joined to one another by means of a shaft (3) extending along the body (4) of the wind generator.

An arrangement is thus obtained such that all the parts the generator (2) are accessible from inside the body (4) of the generator, the operations for assembling and disassembling the generator (2) as well as the necessary maintenance and/or repair operations being able to be carried out without it being necessary to disassemble the wind rotor (1), since with said location of the generator (2) in a position distanced from the wind rotor (1), the space and inaccessibility problems between both occurring in conventional wind generators are eliminated.

According to the invention, the wind rotor (1) which is arranged coupled to the shaft (3) for the rotating transmission to the electric generator (2) is formed with four, five or more blades (5), thus determining a sweep arrangement which allows capturing the action of the wind with the effectiveness which is not possible for wind rotors with two or three blades of conventional wind generators.

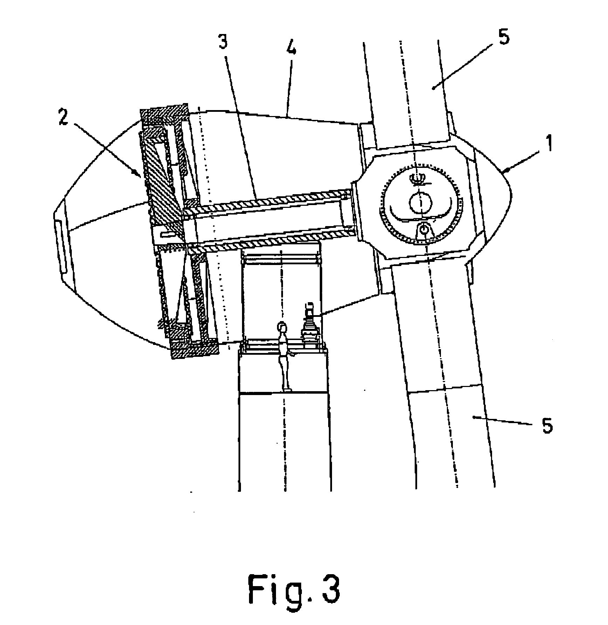

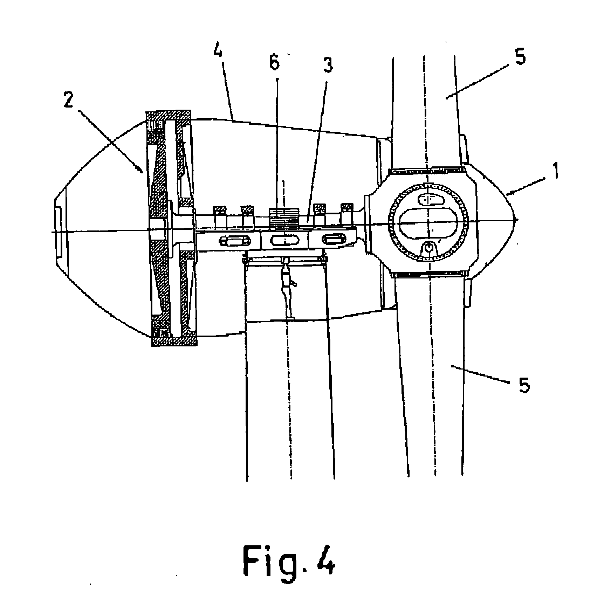

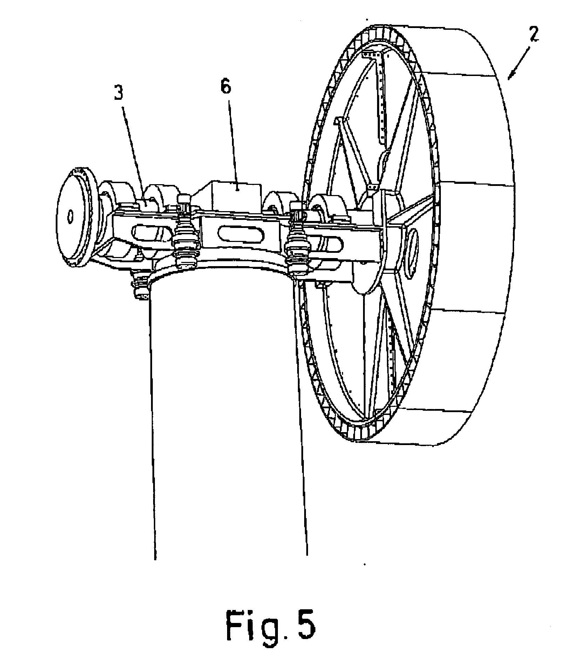

The rotating transmission from the wind rotor (1) to the electric generator (2) can be direct by means of the shaft (3), as in the embodiment of Figure 3, but a combination of the wind rotor (1) with more than three blades (5) with the incorporation of a multiplier device (6) in the shaft (3) joining said wind rotor (1) and the electric generator (3) to one another is also provided, as in the embodiment of Figures 4 and 5, whereby a rotating drive transmission from the wind rotor (1) to the generator (2) is furthermore obtained which allows, with a single multipolar generator (2), the formation of wind generators with power generation productions from 3 to 10 MW.

## Claims

1. Improvements in the structural arrangement of wind generators, of the type comprising a wind generator capturing the action of the wind to rotatably drive an electricity production generator, **characterized in that** the electric generator (2) is arranged at a distance from the wind rotor (1), both being joined to one another by means of a shaft (3) extending along the body (4) of the wind generator, a wind rotor (1) with four, five or more blades (5) being arranged to capture the action of the wind.

2. Improvements in the structural arrangement of wind generators according to claim 1, **characterized in that** the rotating transmission to the electric generator (2) from the wind rotor (1) with four, five or more blades (5) is combined with the incorporation of a multiplier device (6) in the shaft (3) joining them to one another.

3. improvements in the structural arrangement of wind generators according to claim 1, **characterized in that** the electric generator (2) arranged at a distance from the wind rotor (1) is located in relation to the end of the body (4) of the wind generator opposite to that of the wind rotor (1), thus facilitating assembly, disassembly, maintenance and repair operations of the electric generator.

4. improvements in the structural arrangement of wind generators according to claims 1 and 3, **characterized in that** the electric generator (2) arranged at a distance from the wind rotor (1) is joined to such rotor through the shaft (3), the wind rotor (1) being located at an end of the latter and the electric generator (2) being located at the opposite end.
